# FASCICULE DE BREVET EUROPEEN

(11) **EP 1 403 105 B1**
(45) Date de publication et mention de la délivrance du brevet: **29.03.2006**
(21) Numéro de dépôt: 03292332.8
(22) Date de dépôt: 23.09.2003
(51) Int. Cl.: B60H 1/00

(54) **Dispositif de ventilation d'un vehicule automobile**
Lüftungseinrichtung eines Kraftfahrzeugs
Ventilation device for a motor vehicle

(30) Priorité: 26.09.2002 FR 0211938
(43) Date de publication de la demande: 31.03.2004
(73) Titulaire: Peugeot Citroen Automobiles SA, 78943 Vélizy-Villacoublay Cedex (FR)
(72) Inventeur: de Guillebon, Henri, 92500 Rueil-Malmaison (FR); Auger, Jean-Marc, 92350 Le Plessis Robinson (FR); Auffray, Bertrand, 78330 Fontenay-Le-Fleury (FR)
(74) Mandataire: Blot, Philippe Robert Emile

(56) Documents cités:
- EP-A- 0 787 607
- FR-A- 2 712 851
- US-A- 6 112 850
- PATENT ABSTRACTS OF JAPAN vol. 009, no. 249 (M-419), 5 octobre 1985 (1985-10-05) & JP 60 099948 A (NIPPON DENSO KK), 3 juin 1985 (1985-06-03)

## Description

La présente invention concerne un dispositif de ventilation d'un véhicule automobile, du type comportant un groupe motoventilateur apte à propulser un flux d'air et un conduit de ventilation ayant, sur l'essentiel de sa longueur, une section transversale nominale, une première extrémité du conduit étant reliée en sortie du groupe motoventilateur et une seconde extrémité du conduit formant une bouche de diffusion d'air. Un tel dispositif est divulgué par FR 2 712 851.

De nos jours, les véhicules automobiles sont équipés de dispositifs de ventilation permettant de réguler la température de l'habitacle du véhicule, en injectant dans l'habitacle un flux d'air chauffé ou refroidi suivant la température désirée.

Afin d'assurer la circulation du flux d'air jusque dans l'habitacle, le dispositif de ventilation comporte un groupe motoventilateur relié par un conduit de ventilation à une bouche de diffusion d'air dans l'habitacle.

Le conduit de ventilation transmet, à l'intérieur de l'habitacle, le bruit en provenance du groupe motoventilateur. En effet, ce dernier est généralement équipé d'un ventilateur centrifuge ou pulseur qui engendre des bruits importants et gênants à basse fréquence, notamment dans la plage de 0 à 2500 Hz.

Il est connu, pour atténuer la propagation du bruit, d'implanter dans le conduit de ventilation des éléments absorbants acoustiques. Ceux-ci sont constitués par exemple de plaques de mousse.

La mise en oeuvre de tels éléments absorbants complique le procédé de fabrication des conduits de ventilation puisqu'ils nécessitent le découpage et le collage de ces éléments absorbants contre le conduit.

L'invention a pour but de proposer un dispositif de ventilation pour un véhicule automobile qui soit peu bruyant, et dont la fabrication est aisée.

A cet effet, l'invention a pour objet un dispositif de ventilation d'un véhicule automobile du type précité, caractérisé en ce que le conduit comporte, entre le groupe motoventilateur et ladite bouche, au moins une chambre d'expansion disposée suivant la longueur du conduit entre deux tronçons adjacents de section transversale nominale, la ou chaque chambre d'expansion ayant une section transversale supérieure à ladite section transversale nominale, et que la ou chaque chambre présente une section progressivement décroissante suivant la longueur du conduit du groupe motoventilateur vers la bouche de diffusion d'air.

Suivant des modes particuliers de réalisation, le dispositif de ventilation comporte l'une ou plusieurs des caractéristiques suivantes :
- ledit conduit comporte deux chambres d'expansion disposées successivement, reliées l'une à l'autre par un tronçon de section transversale nominale ;
- la ou chaque chambre présente une section progressivement décroissante jusqu'à ladite section transversale nominale ;
- les variations de la section du conduit suivant sa longueur présentent des congés de raccordement ;
- la section transversale maximale de la ou chaque chambre est comprise entre deux et huit fois la section transversale nominale ; et
- la longueur de la ou chaque chambre mesurée suivant la direction d'écoulement dans le conduit est comprise entre la moitié et le double du diamètre d'un disque ayant une surface égale à la section transversale nominale du conduit.

L'invention sera mieux comprise à la lecture de la description qui va suivre, donnée uniquement à titre d'exemple et faite en se référant aux dessins, sur lesquels :
- la figure 1 est une vue schématique en coupe longitudinale d'un dispositif de ventilation d'un véhicule automobile selon l'invention ;
- la figure 2 est une vue en perspective du conduit de ventilation du dispositif de la figure 1 ;
- les figures 3A et 3B sont des vues en perspective des première et seconde chambres d'expansion ménagées suivant la longueur du conduit de la figure 2 ; et
- la figure 4 est une vue en coupe longitudinale à plus grande échelle de la région de raccordement entre un tronçon courant du conduit et une chambre d'expansion désignée par IV sur la figure 2.

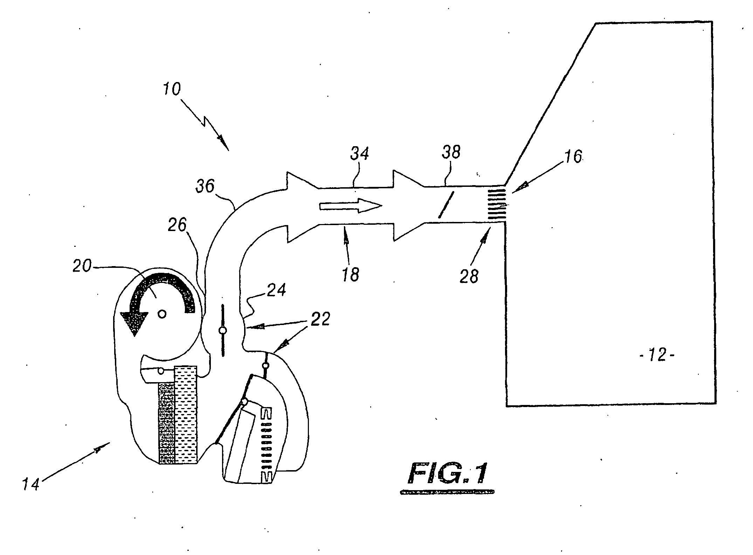

Sur la figure 1 est représenté un dispositif 10 de ventilation d'un véhicule automobile, et notamment de l'habitacle 12 du véhicule automobile.

Ce dispositif comporte essentiellement un groupe motoventilateur 14, une bouche 16 de diffusion de l'air dans l'habitacle et un conduit de ventilation 18 reliant le groupe motoventilateur 14 à la bouche de diffusion d'air 16.

Le groupe motoventilateur 14 comporte, comme connu en soi, un ventilateur centrifuge 20 et un ensemble de volets 22 assurant une canalisation du flux d'air engendré par le ventilateur au travers d'éléments chauffants ou réfrigérants. Le groupe motoventilateur présente une sortie 24 d'évacuation du flux d'air à laquelle est reliée une première extrémité 26 d'admission du conduit 18.

La seconde extrémité notée 28 du conduit 18 forme la bouche de diffusion d'air 16. La bouche de diffusion 16 est avantageusement équipée d'ailettes de guidage du flux d'air dans l'habitacle.

Le conduit 18 représenté sur la figure 1 est dépourvu de bifurcations et relie directement l'extrémité d'admission 26 à l'extrémité de diffusion 28.

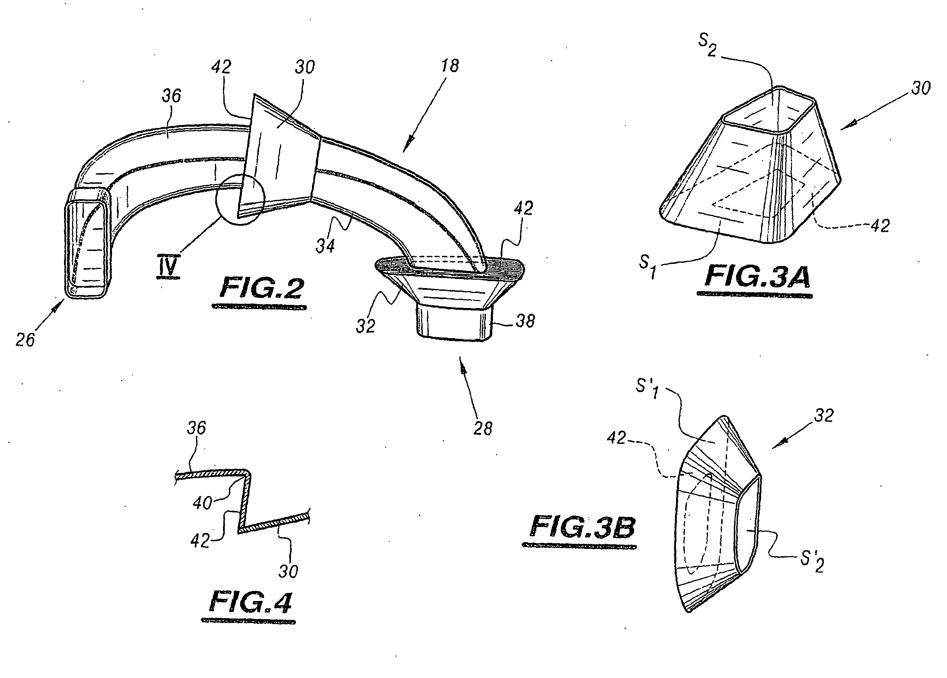

Le conduit a généralement une section rectangulaire, les arêtes étant arrondies, comme illustré sur la figure 2. Le conduit de ventilation présente une section transversale nominale qui est sensiblement constante suivant toute la longueur du conduit. Cette section transversale nominale est par exemple égale à 3300 mm².

En outre, suivant sa longueur, le conduit présente successivement deux chambres d'expansion 30, 32 ayant chacune suivant leur longueur une section transversale supérieure à la section transversale nominale du conduit.

Ces deux chambres d'expansion sont reliées l'une à l'autre suivant la longueur du conduit 18 par un tronçon de liaison 34 de section transversale nominale.

Un tronçon amont 36 de section transversale nominale relie l'entrée d'admission 26 à la première chambre 30. De même, un tronçon aval 38 de section transversale nominale prolonge la deuxième chambre 32 jusqu'à la sortie de diffusion 28.

Chaque chambre 30, 32 présente une section progressivement décroissante suivant le sens d'écoulement de l'air dans le conduit, c'est-à-dire de l'entrée 26 vers la sortie 28.

Les chambres 30 et 32 présentent une forme générale tronconique, dont l'axe est orienté généralement suivant la direction d'écoulement de l'air.

Plus précisément, la section de l'extrémité aval de chaque chambre, en considérant le sens d'écoulement du gaz, est égale à la section nominale du conduit. La section de chaque chambre, à son extrémité amont, est, au contraire, supérieure à la section nominale du conduit. Celle-ci est notamment comprise entre deux et huit fois la section transversale nominale du conduit et de préférence comprise entre trois et cinq fois la section transversale nominale du conduit.

Dans le mode de réalisation envisagé, et comme illustré sur les figures 3A et 3B, les sections transversales amont S₁ et S₁' des chambres d'expansion 30 et 32 sont égales à 14000 mm², les sections S₂, S₂' des chambres d'expansion 30, 32 étant égales, respectivement, à 3300 mm² et 3500 mm².

Comme illustré aux figures, les tronçons courants 36, 34 du conduit communiquent avec les chambres d'expansion 30, 32 sensiblement au centre de la section transversale élargie amont de la chambre.

Ainsi, le conduit 18 s'élargit vers l'extérieur dans les chambres d'expansion 30, 32 suivant toute sa périphérie.

Avantageusement, afin de réduire les pertes de charge le long du conduit et de ne pas occasionner de turbulences aérauliques, les variations de section transversale entre les tronçons courants du conduit et les chambres présentent des congés de raccordement 40, comme illustré sur la figure 4. Le rayon de ces congés est usuellement de l'ordre de 1 à 3 mm.

Les chambres d'expansion créent, suivant le sens d'écoulement des gaz d'échappement, une variation brutale de section obtenue par les fronts 42 formant les faces amont des chambres d'expansion, ces fronts s'étendant généralement perpendiculairement à la direction d'écoulement des gaz d'échappement.

Les longueurs des deux chambres 30, 32 mesurées suivant la direction d'écoulement des fluides sont comprises entre la moitié et le double du diamètre nominal du conduit, c'est-à-dire du diamètre d'un disque dont la surface est égale à la section transversale nominale du conduit.

En particulier, la longueur des première et deuxième chambres 30, 32 est égale, respectivement, à 86 mm et 43 mm.

Les dimensions de chaque chambre sont choisies en fonction de la bande de fréquence sur laquelle le bruit doit être atténué. Le recours à une paire de chambres d'expansion permet, par couplage, d'avoir un effet de réduction du bruit sur une large bande de fréquences, cette largeur de bande étant supérieure à la somme des deux largeurs de bande sur lesquelles agit chaque chambre prise isolément.

Ainsi, avec les dimensions données précédemment, le bruit de ventilation est particulièrement atténué sur la bande de fréquences de 1 à 2 kHz.

On comprend que la présence de chambres d'expansion suivant la longueur du conduit diminue le coefficient de transmission de l'onde acoustique se propageant suivant le conduit. Ainsi, le bruit engendré par le groupe motoventilateur transmis à l'habitacle est réduit.

La forme généralement tronconique des chambres et leur orientation par rapport au sens d'écoulement du fluide permet d'obtenir un bon compromis entre l'effet acoustique désiré et la perte de charge aéraulique ajoutée par les chambres d'une part et l'effet acoustique désiré et la création de sources de bruit supplémentaires nuisibles dues aux turbulences créées par les chambres dans le conduit, d'autre part.

## Revendications

1. Dispositif (10) de ventilation d'un véhicule automobile comportant un groupe motoventilateur (14) apte à propulser un flux d'air et un conduit de ventilation (18) ayant, sur l'essentiel de sa longueur, une section transversale nominale, une première extrémité (26) du conduit étant reliée en sortie du groupe motoventilateur (14) et une seconde extrémité (28) du conduit formant une bouche de diffusion d'air (16), le conduit (18) comporte, entre le groupe motoventilateur (14) et ladite bouche (16), au moins une chambre d'expansion (30, 32) disposée suivant la longueur du conduit entre deux tronçons adjacents (36, 34, 38) de section transversale nominale, la ou chaque chambre d'expansion (30, 32) ayant une section transversale supérieure à ladite section transversale nominale, **caractérisé en ce que** la ou chaque chambre (30, 32) présente une section progressivement décroissante suivant la longueur du conduit (18) du groupe motoventilateur (14) vers la bouche de diffusion d'air (16).

2. Dispositif selon la revendication 1, **caractérisé en ce que** ledit conduit (18) comporte deux chambres d'expansion (30, 32) disposées successivement, reliées l'une à l'autre par un tronçon (34) de section transversale nominale.

3. Dispositif selon la revendication 1 ou 2, **caractérisé en ce que** la ou chaque chambre (30, 32) présente une section progressivement décroissante jusqu'à ladite section transversale nominale.

4. Dispositif selon l'une quelconque des revendications précédentes, **caractérisé en ce que** les variations de la section du conduit (18) suivant sa longueur présentent des congés de raccordement (40).

5. Dispositif selon l'une quelconque des revendications précédentes, **caractérisé en ce que** la section transversale maximale de la ou chaque chambre (30, 32) est comprise entre deux et huit fois la section transversale nominale.

6. Dispositif selon l'une quelconque des revendications précédentes, **caractérisé en ce que** la longueur de la ou chaque chambre (30, 32) mesurée suivant la direction d'écoulement dans le conduit (18) est comprise entre la moitié et le double du diamètre d'un disque ayant une surface égale à la section transversale nominale du conduit (18).

## Patentansprüche

1. Vorrichtung (10) zur Belüftung eines Kraftfahrzeugs, umfassend einen Lüftersatz (14), der einen Luftstrom befördern kann, und eine Belüftungsleitung (18), die auf dem wesentlichen Teil ihrer Länge einen Nennquerschnitt besitzt, wobei ein erstes Ende (26) der Leitung mit dem Austritt des Lüftersatzes (14) verbunden ist und ein zweites Ende (28) der Leitung eine Luftverteilungsöffnung (16) bildet, wobei die Leitung (18) zwischen dem Lüftersatz (14) und der Öffnung (16) mindestens eine Expansionskammer (30, 32) aufweist, die in der Länge der Leitung zwischen zwei benachbarten Abschnitten (36, 34, 38) mit Nennquerschnitt angeordnet ist, wobei die oder jede Expansionskammer (30, 32) einen Querschnitt besitzt, der größer als der Nennquerschnitt ist, **dadurch gekennzeichnet, dass** die oder jede Kammer (30, 32) einen Querschnitt besitzt, der in der Länge der Leitung (18) vom Lüftersatz (14) auf die Luftverteilungsöffnung (16) zu allmählich abnimmt.

2. Vorrichtung nach Anspruch 1, **dadurch gekennzeichnet, dass** die Leitung (18) zwei nacheinander angeordnete Expansionskammern (30, 32) aufweist, die miteinander durch einen Abschnitt (34) mit Nennquerschnitt verbunden sind.

3. Vorrichtung nach Anspruch 1 oder 2, **dadurch gekennzeichnet, dass** die oder jede Kammer (30, 32) einen Querschnitt besitzt, der bis zu diesem Nennquerschnitt allmählich abnimmt.

4. Vorrichtung nach einem der vorhergehenden Ansprüche, **dadurch gekennzeichnet, dass** die Änderungen des Querschnitts der Leitung (18) in ihrer Länge Verbindungsauskehlungen (40) aufweisen.

5. Vorrichtung nach einem der vorhergehenden Ansprüche, **dadurch gekennzeichnet, dass** der maximale Querschnitt der oder jeder Kammer (30, 32) zwischen dem Zwei- und Achtfachen des Nennquerschnitts beträgt.

6. Vorrichtung nach einem der vorhergehenden Ansprüche, **dadurch gekennzeichnet, dass** die Länge der oder jeder Kammer (30, 32), gemessen in der Richtung der Strömung in der Leitung (18), zwischen der Hälfte und dem Zweifachen des Durchmessers einer Scheibe beträgt, die eine Oberfläche gleich dem Nennquerschnitt der Leitung (18) hat.

## Claims

1. Device (10) for ventilating a motor vehicle, including a motorised fan unit (14) adapted to propel a flow of air and a ventilation duct (18) having, over most of its length, a nominal cross-section, a first end (26) of the duct being connected to the outlet of the motorised fan unit (14) and a second end (28) of the duct forming an air diffuser outlet (16), the duct (18) having, between the motorised fan unit (14) and said outlet (16), at least one expansion chamber (30, 32) disposed along the length of the duct between two adjacent lengths (36, 34, 38) of nominal cross-section, and the or each expansion chamber (30, 32) having a cross-section, greater than said nominal cross-section, **characterised in that** the or each chamber (30, 32) has a section progressively decreasing along the length of the duct (18) in the direction from the motorised fan unit (14) to the air diffuser outlet (16).

2. Device according to claim 1, **characterised in that** said duct (18) includes two expansion chambers (30, 32) disposed successively and connected to each other by a length (34) of nominal cross-section.

3. Device according to claim 1 or claim 2, **characterised in that** the or each chamber (30, 32) has a section progressively decreasing to said nominal cross-section.

4. Device according to any one of the preceding claims, **characterised in that** the variations of the section of the duct (18) along its length have radiused connections (40).

5. Device according to any one of the preceding claims, **characterised in that** the maximum cross-section of the or each chamber (30, 32) is from twice to eight times the nominal cross-section.

6. Device according to any one of the preceding claims, **characterised in that** the length of the or each chamber (30, 32) measured in the direction of flow in the duct (18) is from half to twice the diameter of a disc having a surface area equal to the nominal cross-section of the duct (18).
